# DEMANDE DE BREVET EUROPEEN

(11) **EP 2 477 383 A1**
(43) Date de publication de la demande: **18.07.2012**
(21) Numéro de dépôt: 11305051.2
(22) Date de dépôt: 18.01.2011
(51) Int. Cl.: H04M 17/02, H04W 4/24, H04M 15/00, G07F 7/08

(54) **Procédé d'attribution d'un lot à un utilisateur d'un réseau de télécommunications**

(71) Demandeur: Gemalto SA, 92190 Meudon (FR)
(72) Inventeur: Gros, Jean-François, 13012, Marseille (FR)

(57) **Abrégé**

L'invention concerne un procédé d'attribution d'un lot à un utilisateur d'un réseau de télécommunications, le procédé consistant à :

iii- Associer dans le réseau les identifiants de plusieurs cartes de télécommunication, les cartes faisant partie d'un pack, chaque carte étant destinée à être insérée dans un terminal de télécommunications ;
ii- Détecter l'utilisation d'une des cartes pour se connecter au réseau de télécommunications ;
iii- Attribuer le lot à l'utilisateur de cette carte.

## Description

Le domaine de l'invention est celui des télécommunications et concerne un procédé d'attribution d'un lot à un utilisateur d'un réseau de télécommunications d'un opérateur.

L'accès à un réseau de télécommunications d'un opérateur est classiquement réalisé à l'aide d'un terminal, par exemple un téléphone mobile, dans lequel est insérée une carte d'abonné. Cette carte est par exemple une carte Sim (ou plus généralement un UICC) renfermant des clés de cryptage et un identifiant de la carte. Cet identifiant est par exemple l'IMSI (International Mobile Subscription Identifier) de la carte et cet identifiant est unique.

La carte Sim est en général fournie à l'utilisateur par l'opérateur de téléphonie mobile, après souscription d'un abonnement. L'utilisateur a cependant également la possibilité d'acheter une carte prépayée contenant un crédit de consommation, par exemple 10 ou 20 heures de communication.

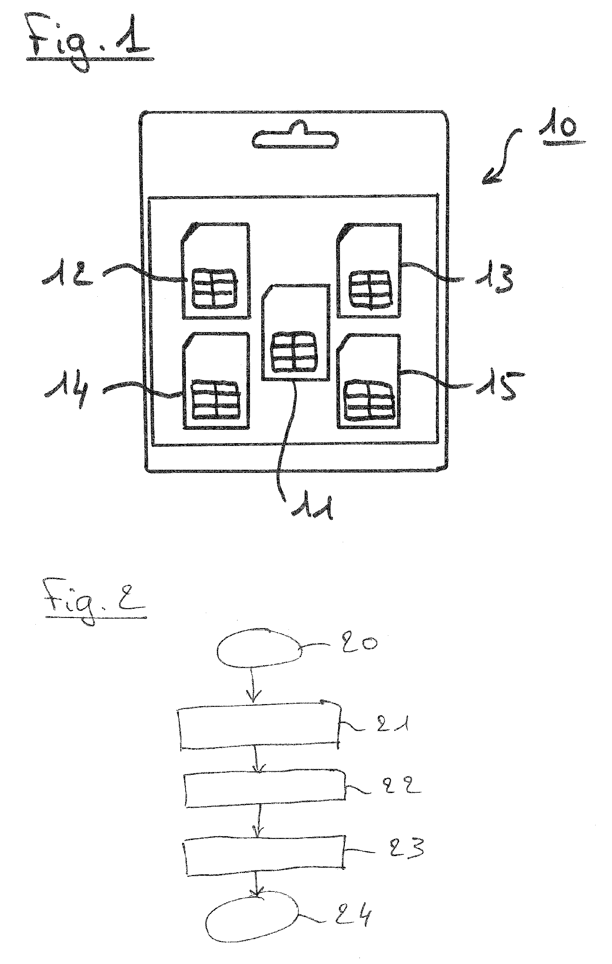

Certains opérateurs proposent maintenant à leurs clients des packs de cartes Sims, ces packs comprenant plusieurs cartes Sims, par exemple cinq cartes tel que représenté à la figure 1.

La figure 1 représente un pack 10 comprenant cinq cartes Sims 11 à 15. La carte 11 est une carte prépayée et identifiée comme telle. Elle comprend donc un certain crédit de consommation que l'acheteur peut consommer de suite après l'avoir insérée dans un terminal. En réalité, le crédit de consommation n'est pas physiquement présent sur la carte 11 mais celle-ci est associée à un compte prépayé dans le système de facturation de l'opérateur. Après avoir été insérée dans un terminal, son identifiant, par exemple son IMSI, est transmis au réseau de l'opérateur et détecté comme étant celui d'un compte prépayé. Les unités du compte sont alors débitées en fonction de la durée des communications.

Les autres cartes, 12 à 15, sont des cartes qui peuvent être offertes par l'opérateur à l'acheteur. Elles ne sont en principe associées à aucun compte prépayé, c'est-à-dire qu'elles doivent être chargées en unités de télécommunication par leurs détenteurs. Ce chargement consiste à se connecter au réseau de l'opérateur, à choisir un nombre d'unités de communication à créditer sur un compte, et à régler (par exemple en transmettant le numéro d'une carte bancaire) le montant correspondant. On crée ainsi un compte d'utilisateur associé à chacune des cartes 12 à 15.

Les cartes 12 à 15 sont destinées à être offertes par l'acheteur du pack 10 à ses connaissances (famille, amis, collègues,...) afin que ceux-ci les utilisent pour communiquer sur le réseau de l'opérateur. Ces communications peuvent consister en de la voix, des données, des SMS par exemple.

Un des problèmes posé est que généralement les cartes 12 à 15 ne sont pas utilisées, soit parce que l'acheteur du pack ne trouve pas d'incitation à les offrir à son entourage, soit parce que les personnes qui reçoivent ces cartes ne trouvent pas d'incitation à les utiliser.

Un autre problème, consécutif du précédent, est qu'en général les identifiants des cartes (IMSI) sont provisionnés au niveau du HLR (Home Location Register) du réseau de l'opérateur et l'opérateur paie pour ce provisionnement. La non-utilisation des cartes entraîne donc un coût pour l'opérateur.

La présente invention a notamment pour objectif de remédier à ces inconvénients.

Plus précisément, un des objectifs de l'invention est d'inciter l'acheteur d'un pack de cartes à offrir à d'autres utilisateurs potentiels de ces cartes les cartes dont il n'a pas personnellement besoin et/ou d'inciter ces utilisateurs d'utiliser les cartes qui leur ont été offertes.

Cet objectif, ainsi que d'autres qui apparaîtront par la suite, est atteint grâce à un procédé d'attribution d'un lot à un utilisateur d'un réseau de télécommunications, le procédé consistant à :
i- Associer dans le réseau les identifiants de plusieurs cartes de télécommunication, les cartes faisant partie d'un pack et chaque carte étant destinée à être insérée dans un terminal de télécommunications ;
ii- Détecter l'utilisation d'une des cartes pour se connecter au réseau de télécommunications ;
iii- Attribuer le lot à l'utilisateur de la carte.

La carte est préférentiellement distinguable des autres cartes et associée à un compte prépayé dans le système de facturation du réseau.

Alternativement, la carte n'est pas distinguable des autres cartes et elle est provisionnée au niveau du système de facturation du réseau lors de l'étape ii.

La carte peut également être une carte non associée à un compte prépayé.

Dans un premier mode de mise en oeuvre de l'invention, l'utilisation de la carte est une simple connexion du terminal de télécommunications au réseau.

Dans un second mode de mise en oeuvre, l'utilisation de la carte est un chargement d'unités de communications sur un compte pour un montant supérieur à une valeur de seuil.

L'attribution du lot peut consister à proposer à l'utilisateur un choix entre plusieurs lots de base, parmi lesquels :
- des unités de communication vocales sur le réseau de télécommunications ;
- des unités de SMS gratuits sur le réseau de télécommunications ;
- des volumes de données sur le réseau de télécommunications ;
- des points de fidélité ;
- des unités de communication gratuites entre l'utilisateur et un utilisateur d'une des autres des cartes ;
- des sonneries ou des logos.

La détection de l'étape ii consiste avantageusement à détecter l'IMSI de la carte.

Le lot peut être attribué à l'utilisateur de la première des cartes uniquement et/ou aux utilisateurs des cartes utilisées après l'utilisation de cette première carte.

D'autres caractéristiques et avantages de l'invention apparaîtront à la lecture de la description suivante d'un mode de mise en oeuvre préférentiel, donné à titre illustratif et non limitatif, et des dessins annexés dans lesquels :
- La figure 1 représente un pack 10 comprenant cinq cartes Sims ;
- La figure 2 représente les trois principales étapes du procédé selon l'invention.
   La figure 1 a été décrite en référence à l'état de la technique.
   La figure 2 représente les trois principales étapes du procédé selon l'invention.

L'invention propose d'inciter l'acheteur d'un pack de cartes, comprenant par exemple une carte prépayée, à offrir à d'autres utilisateurs potentiels (membres de sa famille, amis, collègues de travail,...) les cartes dont il n'a pas personnellement besoin et éventuellement également d'inciter ces utilisateurs d'utiliser les cartes qui leur ont été offertes, en les gratifiant d'une récompense s'ils utilisent ces cartes. L'utilisateur qui se voit offrir cette gratification (qui sera appelé lot ou cadeau dans la suite de cette description), peut être l'acheteur du pack de cartes ou une personne à qui l'acheteur du pack de cartes donne une des cartes du pack.

Comme il sera vu par la suite, l'utilisation d'une carte peut consister en une simple connexion au réseau de l'opérateur (l'utilisateur insère sa carte dans un terminal, par exemple un téléphone portable, allume celui-ci, et se connecte - avec ou sans composition d'un numéro spécifique - de ce fait au réseau). L'utilisation de la carte peut également consister à charger des unités de communication sur un compte pour un montant supérieur à une valeur de seuil, cette valeur de seuil pouvant être de l'ordre de quelques Euros à plusieurs dizaines, voire centaines d'Euros.

Dans la figure 2, l'étape 20 est une étape de début.

Lors d'une étape 21, les identifiants de plusieurs cartes de télécommunication d'un même pack sont associés. A titre d'exemple et au regard de la figure 1, les identifiants IMSI11, IMSI12, IMSI13, IMSI14 et IMSI15 correspondant aux IMSI des cartes 11 à 15 sont répertoriés comme étant liés, puisque ces cartes font partie du même pack. Cette association est par exemple réalisée au niveau du HLR du réseau.

Lors d'une étape 22, on détecte l'utilisation d'une des cartes pour se connecter au réseau de télécommunications. Cette détection peut être réalisée au niveau du HLR, lorsqu'une des cartes du pack se connecte au réseau ou lorsqu'un chargement d'unités de communication est demandé par un utilisateur. L'identifiant de la carte (l'IMSI) est ici utilisé pour reconnaître quelle carte s'est connectée au réseau. L'utilisateur de cette carte est typiquement une des personnes qui aura reçue une des cartes 12 à 15.

Enfin, lors d'une étape 23, un lot est attribué à l'utilisateur de la carte.

On notera que deux modes de mise en oeuvre, éventuellement complémentaires, peuvent être utilisés :
- Soit le lot peut être attribué à l'utilisateur de la première des cartes utilisées (carte 11 en principe) lorsqu'une autre carte du pack est utilisée. La détection d'une connexion d'une des cartes ayant les IMSI 12 à 15 provoque donc l'attribution d'un lot à l'utilisateur de la carte ayant l'IMSI 11. Ceci a pour objectif d'inciter l'acheteur du pack 10 à remettre à ses connaissances les cartes 12 à 15;
- Soit, une fois que l'IMSI 11 a été détecté au niveau du HLR (l'utilisateur ayant la carte 11 s'est connecté au moins une fois au réseau), la connexion ultérieure d'une des cartes du pack provoque l'attribution d'un lot à l'utilisateur de cette carte. Ceci a pour objectif d'inciter les personnes ayant reçu une des cartes 12 à 15 d'utiliser ces cartes.

L'étape 24 est une étape de fin.

La carte 11 est préférentiellement physiquement distinguable des autres cartes et associée à un compte prépayé dans le système de facturation du réseau. On entend par physiquement distinguable, soit une mention apportée sur la carte (un signe, une couleur différente des autres cartes), permettant à l'acheteur du pack 10 d'identifier quelle est la carte prépayée.

Alternativement, la carte prépayée n'est pas distinguable des autres cartes et elle est provisionnée au niveau du système de facturation du réseau lors de sa première connexion au réseau. La première carte du pack qui se connecte au réseau est alors considérée comme étant la carte prépayée et un crédit lui est alloué.

Dans un autre mode de mise en oeuvre, aucune des cartes n'est associée à un compte prépayé (toutes les cartes sont du même type) et c'est à l'utilisateur de provisionner son compte au niveau du système de facturation du réseau lors de sa première connexion au réseau.

Comme indiqué précédemment, on entend par « utilisation » d'une carte soit sa connexion au réseau (son IMSI y est reconnu), soit un chargement d'unités de communications sur un compte pour un montant supérieur à une valeur de seuil. Cette valeur de seuil peut être faible ou importante, en fonction de la valeur du lot attribué.

L'attribution du lot peut consister à directement attribuer un lot, appelé lot de base, à l'utilisateur de la carte ou alors à laisser le choix de ce lot de base à l'utilisateur. Il est par exemple possible d'afficher sur l'écran du terminal un menu déroulant que l'utilisateur peut consulter pour choisir entre, par exemple, les lots de base suivants :
- des unités de communication vocales sur le réseau de télécommunications, par exemple « 1 heure de communication vous sont offertes » ;
- des unités de SMS gratuits sur le réseau de télécommunications, par exemple
   « Vous avez gagné 50 SMS gratuits » ;
- des volumes de données sur le réseau de télécommunications, par exemple
   « Vous avez gagné un volume de téléchargement de 20 Mb » ;
- des points de fidélité ;
- des unités de communication gratuites (communications vocales, SMS ou transfert de données) entre cet utilisateur et un utilisateur d'une autre carte du pack ;
- des sonneries ou des logos.

D'autres lots peuvent aisément être imaginés et proposés à l'utilisateur de la carte, par exemple en fonction de son profil d'âge, son sexe, ses préférences, etc...

L'ICCID d'une carte peut également remplacer son IMSI à des fins d'identification. L'ICCID est le numéro de série de la carte.

## Revendications

1. Procédé d'attribution d'un lot à un utilisateur d'un réseau de télécommunications, ledit procédé consistant à :
ii- Associer dans ledit réseau les identifiants de plusieurs cartes (11 à 15) de télécommunication, lesdites cartes (11 à 15) faisant partie d'un pack (10), chaque carte (11 à 15) étant destinée à être insérée dans un terminal de télécommunications ;
ii- Détecter l'utilisation d'une desdites cartes (11 à 15) pour se connecter audit réseau de télécommunications ;
iii- Attribuer ledit lot audit utilisateur de ladite carte (11 à 15).

2. Procédé selon la revendication 1, **caractérisé en ce que** ladite carte (11) est distinguable desdites autres cartes (12 à 15) et associée à un compte prépayé dans le système de facturation dudit réseau.

3. Procédé selon la revendication 1, **caractérisé en ce que** ladite carte (11 à 15) n'est pas distinguable desdites autres cartes et **en ce qu'**elle est provisionnée au niveau du système de facturation dudit réseau lors de l'étape ii.

4. Procédé selon l'une des revendications 1 à 3, **caractérisé en ce que** ladite carte (11 à 15) est une carte non associée à un compte prépayé.

5. Procédé selon l'une des revendications 1 à 4, **caractérisé en ce que** ladite utilisation de ladite carte (11 à 15) est une connexion dudit terminal de télécommunications audit réseau.

6. Procédé selon l'une des revendications 1 à 4, **caractérisé en ce que** ladite utilisation de ladite carte (11 à 15) est un chargement d'unités de communication sur un compte pour un montant supérieur à une valeur de seuil.

7. Procédé selon l'une des revendications 1 à 6, **caractérisé en ce que** ladite attribution dudit lot consiste à proposer audit utilisateur un choix entre plusieurs lots de base, parmi lesquels :
- des unités de communication vocales sur ledit réseau de télécommunications ;
- des unités de SMS gratuits sur ledit réseau de télécommunications ;
- des volumes de données sur ledit réseau de télécommunications ;
- des points de fidélité ;
- des unités de communication gratuites entre ledit utilisateur et un utilisateur d'une des autres desdites cartes ;
- des sonneries ou des logos.

8. Procédé selon l'une des revendications 1 à 7, **caractérisé en ce que** ladite détection de l'étape ii consiste à détecter l'IMSI de ladite carte (11 à 15).

9. Procédé selon l'une des revendications 1 à 8, **caractérisé en ce que** ledit lot est attribué à l'utilisateur de la première desdites cartes (11 à 15) uniquement.

10. Procédé selon l'une des revendications 1 à 8, **caractérisé en ce que** ledit lot est attribué aux utilisateurs des cartes utilisées après qu'une première carte ait été utilisée.

11. Procédé selon la revendication 1, **caractérisé en ce que** ledit lot est attribué à tous les utilisateurs des cartes associées dans ledit réseau.
